# DEMANDE DE BREVET EUROPEEN

(11) **EP 1 217 327 A2**
(43) Date de publication de la demande: **26.06.2002**
(21) Numéro de dépôt: 01403252.8
(22) Date de dépôt: 14.12.2001
(51) Int. Cl.: G01B 5/20, G01B 5/28

(54) **Procédé et dispositif de mesure de la planéité d'une surface**

(30) Priorité: 20.12.2000 FR 0016659
(71) Demandeur: LABORATOIRE CENTRAL DES PONTS ET CHAUSSEES, 75015 Paris (FR)
(72) Inventeur: Boulay, Claude, 95160 Montmorency (FR); Forey, Emmanuel, 10000 Troyes (FR)
(74) Mandataire: Le Bras, Hervé

(57) **Abrégé**

L'invention concerne un procédé et un dispositif de mesure de la planéité d'une surface (21).

La surface à mesurer (21) est disposée parallèlement à une surface de référence (11). Un chariot (18) mobile en X et Y dans un plan intermédiaire parallèle aux surfaces (11 et 21) comporte deux capteurs (20a, 20b) de distance à transformateurs différentiels qui palpent respectivement la surface de référence (11) et la surface à mesurer (21). On relève les déplacements des capteurs (20a, 20b) aux points d'intersection d'un maillage carré.

On additionne ces déplacements pour chaque point du maillage, on soustrait les déplacements du point origine, et les défauts de la surface de référence (11) préalablement mesurés pour les mêmes points. On obtient ainsi les défauts réels de la surface à mesurer (21), aux points d'intersection du maillage, ce qui permet d'établir la cartographie de la surface à mesurer (21).

## Description

L'invention concerne un procédé et un appareil pour mesurer les défauts de planéité d'une surface, notamment des surfaces d'appui impliquées dans les essais de compression sur bétons.

Pour déterminer certaines caractéristiques des bétons à hautes performances, on réalise des essais de compression d'éprouvettes cylindriques. Or, il apparaît que les résultats de ces essais dépendent, plus fortement que pour un béton classique, de la planéité des surfaces comprimées, c'est-à-dire des surfaces des éprouvettes et des surfaces des plateaux de presse. Par conséquent, les essais ne peuvent être validés pour un béton de haute performance si les défauts de planéité des surfaces comprimées dépassent une certaine valeur pourtant inférieure à ce que préconise la norme NF P18416. Ainsi, des essais récents sur des cylindres de béton à hautes performances de 160 x 320 mm ont montré l'influence de la planéité sur les résistances obtenues. Un défaut typique de 0,1 mm conforme à la norme NF P18416 conduisait à une résistance mesurée de 80 MPa au lieu d'une résistance réelle à la compression de 100 MPa. Il semble que cette influence est d'autant plus marquée que la résistance à la compression est élevée.

Les moyens de contrôle, règle à fil ou marbre, suggérés dans les normes concernant l'essai de compression, n'ont pas la résolution suffisante et ne donnent que des renseignements incomplets. Il existe bien dans le commerce des machines à mesurer tridimensionnelles adaptées au contrôle industriel de forme. Outre leurs prix prohibitifs, ces machines ne répondent pas aux besoins d'un laboratoire de contrôle des résistances des bétons.

Le but de l'invention est de proposer un procédé et un appareil de mesure des défauts de planéité d'une surface qui soient faciles à mettre en oeuvre, qui puissent embrasser une surface de 320 mm x 320 mm, et qui donnent une précision au moins égale à 5 µm.

Le procédé selon l'invention est caractérisé par les étapes suivantes :
a) on place une surface de référence en regard de la surface à mesurer et parallèlement à cette dernière,
b) on déplace un chariot sur lequel sont montés tête-bêche deux capteurs de déplacement susceptibles de fournir des indications de mesure de leurs déplacements, en va-et-vient selon un axe X et pas-à-pas selon un axe Y perpendiculaire à l'axe X dans un plan X0Y intermédiaire entre la surface de référence et la surface à mesurer, l'un des capteurs palpant la surface de référence et l'autre capteur palpant la surface à mesurer, perpendiculairement au plan X0Y,
c) on relève les indications de mesure des deux capteurs de déplacement aux points d'intersection d'un maillage en X et Y et les coordonnées XᵢYᵢ de ces points d'intersection,
d) on convertit pour chaque point d'intersection (X, Yᵢ) du maillage, les indications de mesure des capteurs en valeurs de déplacement (z₁ z₂),
e) on soustrait, pour chaque point d'intersection (Xᵢ, Yᵢ) du maillage, les valeurs de déplacement d'un point origine (z₁₀, z₂₀), respectivement des valeurs de déplacement (z₁, z₂), afin d'obtenir des écarts (Δz₁, Δz₂) de déplacement de chaque capteur par rapport au point origine,
f) on additionne pour chaque point d'intersection (Xᵢ, Yᵢ) du maillage les écarts Δz₁ et Δz₂ afin d'obtenir la mesure des défauts de planéité Zᵢ de la surface à mesurer aux points d'intersection (Xᵢ, Yᵢ) par rapport à la surface de référence, et
g) on établit la cartographie de la surface à mesurer.

De préférence, après l'étape f), et pour chaque point d'intersection (1), on soustrait du défaut de planéité Zᵢ calculé, le défaut de planéité de la surface de référence obtenu en remplaçant la surface à mesurer par une surface plane sans défauts et en exécutant préalablement les étapes a) à f) avec le même maillage. Si besoin est, on procède à un remaillage.

Pour obtenir la précision souhaitée, on utilise avantageusement des capteurs de déplacement à transformateurs différentiels.

L'appareil selon l'invention pour mesurer les défauts de planéité d'une surface disposée sur un support est caractérisé par le fait qu'il comporte :
un bâti comprenant un cadre supérieur et un cadre inférieur reliés par une pluralité d'entretoises et définissant deux plans sensiblement parallèles,
une plaque montée dans le cadre supérieur et dont la face inférieure définit une surface de référence,
un ensemble de trois pieds supportant le bâti et destinés à prendre appui sur le support autour de la surface à mesurer, lesdits trois pieds étant réglables en hauteur afin de permettre de positionner la surface à mesurer de manière sensiblement parallèle à la surface de référence,
un chariot monté sur le cadre inférieur de telle manière qu'il soit mobile dans le plan défini par ce cadre inférieur selon des axes orthogonaux X et Y,
une paire de capteurs de déplacement montés tête-bêche sur ledit chariot, le capteur supérieur palpant la surface de référence et le capteur inférieur étant susceptible de palper la surface à mesurer, lesdits capteurs fournissant des signaux électriques en fonction de leurs déplacements,
des moyens pour mesurer les positions X et Y du chariot, et
des moyens de traitement des signaux électriques fournis par les capteurs.

Les avantageuses dispositions suivantes sont en outre adoptées :
- les capteurs sont des capteurs de déplacement à transformateurs différentiels ;
- le chariot est monté coulissant sur deux premières glissières parallèles à l'axe X et supportées à leurs extrémités par deux coulisseaux montés coulissant respectivement sur des deuxièmes glissières parallèles l'axe Y et supportées par le cadre inférieur ;
- les moyens de mesure de la position X du chariot comportent un premier potentiomètre rotatif monté sur un coulisseau et entraîné en rotation par une première courroie fixée au chariot, ladite première courroie crantée passant autour d'une première poulie de renvoi montée sur l'autre coulisseau ;
- les moyens de mesure de la position Y du chariot comportent un deuxième potentiomètre rotatif monté à une extrémité d'une deuxième glissière et entraînée en rotation par une deuxième courroie crantée fixée au coulisseau monté sur ladite deuxième glissière, ladite deuxième courroie crantée passant autour d'une deuxième poulie de renvoi montée à l'autre extrémité de ladite deuxième glissière ;
- les potentiomètres rotatifs sont reliés aux moyens de traitement qui transforment les indications de ces potentiomètres en position X et Y.

D'autres caractéristiques et avantages de l'invention ressortiront à la lecture de la description suivante faite à titre d'exemple et en référence aux dessins annexés, dans lesquels :
la figure 1 est une vue en perspective de l'appareil selon l'invention ;
les figures 2 et 3 sont des vues latérales de l'appareil de la figure 1 au cours de son installation au-dessus d'une surface à mesurer ;
la figure 4 montre en gras le cheminement du chariot au cours du relevé des défauts et les points d'intersection du maillage pour lesquels on relève les coordonnées Xᵢ, Yᵢ et les déplacements des capteurs ;
la figure 5 montre schématiquement le procédé selon l'invention ; et
les figures 6a à 6d montrent les images de quatre cartographies d'un même plateau de presse.

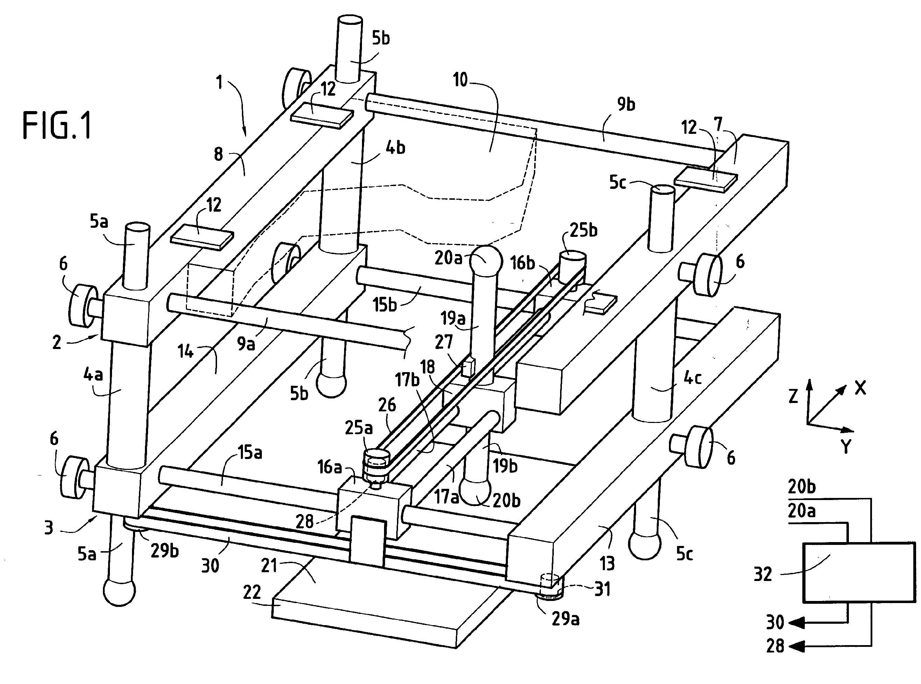

La figure 1 montre un appareil 1 selon l'invention qui comporte un cadre supérieur 2 et un cadre inférieur 3 rigidement espacés l'un de l'autre au moyen de trois entretoises 4a, 4b, 4c creuses à travers lesquelles peuvent glisser trois pieds 5a, 5b, 5c réglables en hauteur et immobilisés à l'aide de moyens de serrage 6.

Le cadre supérieur 2 comporte une traverse droite 7 et une traverse gauche 8 rigidement reliées par des barres latérales 9a et 9b. A l'intérieur du cadre supérieur 2 est montée une plaque de verre 10 dont la face inférieure définit une surface de référence 11 pour les mesures. La plaque de verre 10 est fixée sur les traverses 7 et 8 au moyen d'une pluralité de pattes 12.

Le cadre inférieur 3 comporte une traverse droite 13 et une traverse gauche 14 reliées par leur extrémités latérales respectives au moyen de deux glissières 15a, 15b parallèles au plan de la surface de référence 11. Sur ces glissières 15a et 15b sont montés coulissants deux coulisseaux référencés 16a pour le coulisseau de la glissière 15a et 16b pour le coulisseau de la glissière 15b. Ces coulisseaux 16a et 16b sont rigidement reliés par deux autres glissières référencées 17a et 17b qui s'étendent parallèlement au plan de la surface de référence 11 et perpendiculairement aux glissières 16a et 16b. Un chariot 18 est monté coulissant sur les glissières 17a, 17b. Ce chariot 18 comporte un mât supérieur 19a qui s'étend vers la surface de référence 11 et est perpendiculaire à cette dernière et un mât inférieur 19b qui s'étend dans le sens opposé au mât 19a. Aux extrémités des mâts 19a et 19b sont montés des capteurs de déplacement, référencés respectivement 20a et 20b, et susceptibles de se déplacer dans une direction Z perpendiculaire à la direction X définie par les glissières 17a, 17b, et à la direction Y définie par les glissières 15a et 15b. Le capteur supérieur 20a palpe la surface de référence 11 et le capteur inférieur 20b est destiné à palper la surface à mesurer 21 d'une pièce 22 disposée sur un support ou une table 23.

Avant de procéder aux mesures des défauts de planéité de la surface à mesurer 21, on dispose la surface de référence 11 parallèlement à la surface à mesurer 21 et à une distance prédéterminée du chariot 18, qui est fonction des dimensions de mât inférieur 19b.

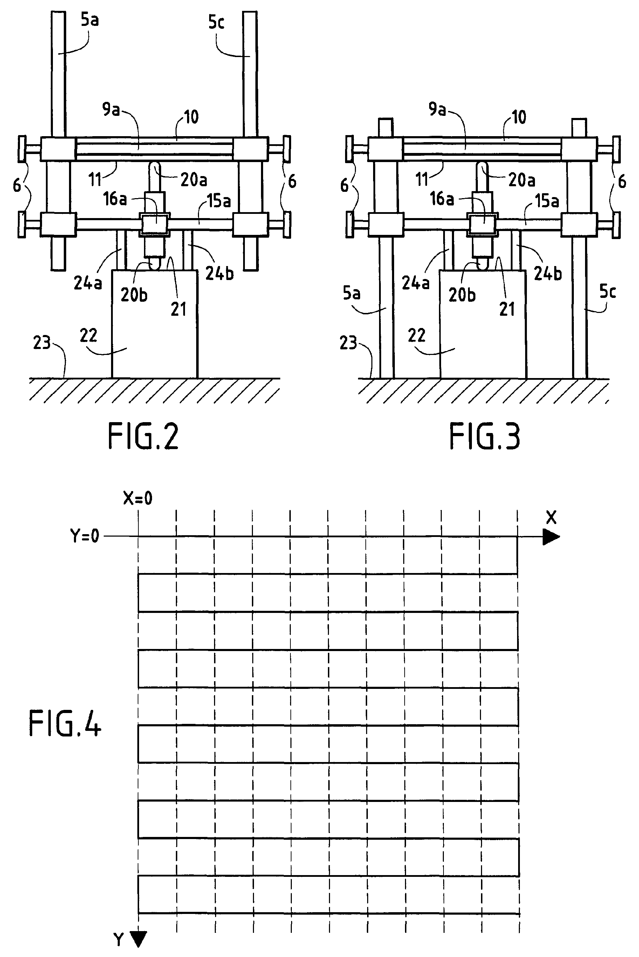

Pour ce faire, ainsi que cela est montré sur les figures 2 et 3, on dispose deux cales calibrées 24a, 24b sur la surface à mesurer 21, on fait reposer les glissières 15a et 15b de l'appareil 1 sur ces deux cales 24a, 24b, les pieds 5a, 5b, 5c étant alors remontés et immobilisés par les moyens de serrage 6. On desserre les moyens de serrage 6 pour que les extrémités inférieures des pieds 5a, 5b, 5c reposent sur la table 23. On serre de nouveau les moyens de serrage 6 afin d'immobiliser l'appareil 1 par rapport aux pieds 5a, 5b, 5c, et on enlève les cales 24a, 24b.

La surface à mesurer 21 est alors parallèle à la surface de référence 11, et le capteur inférieur 20b est en appui sur la surface à mesurer.

Les pieds 5a, 5b, 5c, ainsi que cela se voit sur la figure 1, sont disposés aux sommets d'un triangle isocèle pour constituer un trépied qui entoure la pièce 22. Les entretoises 4a et 4b relient les extrémités correspondantes des traverses de gauche 8 et 14, tandis que l'entretoise 4c relie les parties médianes des traverses de droite 7 et 13. Ces entretoises 4a, 4b et 4c ont la même longueur, afin que les glissières 15a et 15b soient situées par construction dans un plan parallèle à la surface de référence 11.

Le chariot 18 peut être déplacé manuellement en va-et-vient le long des glissières 17a et 17b dans le sens de l'axe des X, et les coulisseaux 16a, 16b peuvent être déplacés ensemble manuellement, pas à pas, le long des glissières 15a et 15b dans le sens de l'axe des Y. Ainsi, le chariot 18 est mobile dans un plan X0Y parallèle à la surface de référence 11 et à la surface à mesurer 21.

Les coulisseaux 16a et 16b sont équipés chacun sur leur face supérieure d'une poulie de renvoi 25a, 25b sur laquelle passe une courroie crantée 26 dont un brin est fixé sur le mât supérieur 19a au point référencé 27. La poulie 25a entraîne un potentiomètre rotatif 28.

Lorsqu'on déplace le chariot 18 le long des glissières 17a, 17b, la courroie 26 est entraînée, ce qui entraîne la rotation des poulies 25a, 25b et la rotation du potentiomètre rotatif 28 qui fournit des indications électriques en fonction de la position du chariot 18 le long de l'axe des X.

De la même manière, les faces inférieures des extrémités des traverses inférieures 13 et 14 au droit de la glissière 15a sont équipées de poulies de renvoi 29a, 29b sur lesquelles passe une courroie crantée 30 dont un brin est fixé sur le coulisseau 16a.

La poulie de renvoi 29a entraîne un deuxième potentiomètre rotatif 31 qui fournit des indications électriques sur la position du coulisseau 16a et par le fait même sur la position du chariot 18 le long de l'axe des Y.

Les deux potentiomètres rotatifs 28 et 31 sont reliés à un organe de calcul 32. Les capteurs de déplacement 20a, 20b, qui fournissent également des indications de mesure de leur déplacement, sont également reliés à l'organe de calcul 32 qui peut être avantageusement un ordinateur PC comportant un écran de visualisation et une imprimante.

L'organe de calcul 32 comporte des moyens pour transformer les indications délivrées par les potentiomètres rotatifs 28 et 30 en valeurs de déplacement X et Y du chariot 18, et des moyens pour transformer les indications délivrées par les capteurs de déplacement 20a et 20b en valeurs de déplacement z₁ et z₂ de ces capteurs selon l'axe Z.

Selon l'invention, on relève les valeurs z₁ et z₂ pour des points d'intersection (Xᵢ, Yᵢ) d'un maillage carré selon les axes X et Y, montré sur la figure 4, dont chaque maille a par exemple 1 cm de côté. Pour ce faire, on relève d'abord les valeurs z₁₀ et z₂₀ pour le point d'abscisse X = 0 et Y = 0.

L'organe de calcul 32 soustrait, pour chaque point d'intersection du maillage d'abscisse Xᵢ, Yᵢ, les valeurs z₁₀ et z₂₀ respectivement de z₁ et z₂, ce qui permet d'obtenir pour chaque point (Xᵢ, Yᵢ) du maillage, l'écart Δz₁ du déplacement du capteur 20a par rapport au point origine (X = 0, Y = 0) de la surface de référence 11 et l'écart Δz₂ du déplacement du capteur 20b par rapport au point origine de la surface à mesurer 21.

Ensuite, l'organe de calcul 32 additionne pour chaque point (Xᵢ, Yᵢ) du maillage, les valeurs obtenues Δz₁ et Δz₂, afin d'obtenir la mesure Zᵢ du défaut de planéité du point correspondant de la surface à mesurer 21 par rapport à l'origine (X = 0, Y = 0) de la surface à mesurer 21.

Si la surface de référence 11 est plane et sans défauts, la matrice des valeurs Xᵢ, Yᵢ, Zᵢ permet d'établir le profil de la surface à mesurer 21.

Si en outre le chariot 18 se déplace dans un plan rigoureusement parallèle au plan de référence sans défauts 11, les valeurs Δz₁ sont nulles.

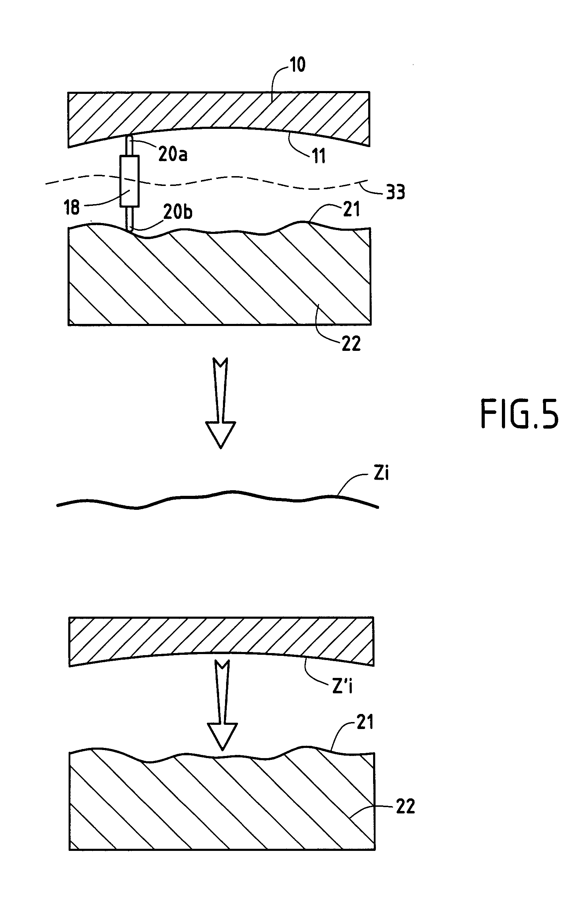

Toutefois, si le chariot 18 ne se déplace pas rigoureusement dans un plan parallèle au plan de référence sans défauts 11, ainsi que cela est montré de manière exagérée par la ligne pointillée référencée 33 sur la figure 5, le capteur 20a fournit des indications de mesure faussées et le capteur 20b fournit des indications de mesure faussées dans le sens contraire. Le fait que, selon le procédé de l'invention, on additionne Δz₁ et Δz₂ pour obtenir la mesure Zᵢ, le profil obtenu est correct à condition que les capteurs 20a et 20b mesurent des déplacements dans des directions opposées à l'axe Z.

C'est pourquoi les coulisseaux 16a et 16b et le chariot 18 sont montés sur leurs glissières respectives de telle manière que le roulis et le tangage du chariot 18 au cours du balayage en X et Y, induisent des imprécisions de mesure inférieures à 3 µm. La rigidité des glissières 15a, 15b, 17a, et 17b est également calculée de manière à limiter les imprécisions des mesures.

Si la surface de référence 11 est plane et sans défauts, l'organe de calcul 32 permet d'afficher ou d'imprimer les courbes d'iso-valeurs du profil de la surface à mesurer 21 à l'aide d'un logiciel approprié.

Sur la figures 5, on voit que la surface de référence 11 n'est pas sans défauts et le profil mesuré Zᵢ est différent du profil de la surface à mesurer 21. Il est alors nécessaire de corriger les valeurs Zᵢ pour chaque point d'intersection (Xᵢ, Yᵢ) du maillage.

Pour ce faire, on mesure préalablement les défauts de la surface de référence 11 en plaçant l'appareil 1 décrit ci-dessus sur un marbre réputé sans défaut, par le procédé décrit ci-dessus.

On obtient ainsi une nouvelle matrice de valeurs (Xᵢ, Yᵢ, Z'ᵢ) que l'on archive dans une mémoire de l'organe de calcul 32.

Pour chaque point de coordonnées Xᵢ, Yᵢ, on soustrait de la mesure Zᵢ du défaut calculé de la surface à mesurer 21, la mesure Z'ᵢ du défaut mesuré pour le même point de coordonnées Xᵢ Yᵢ de la surface de référence 11, ainsi que cela est montré schématiquement sur la figure 5, afin d'obtenir le profil réel de la surface à mesurer 21. Ceci exige évidemment que les maillages soient identiques au cours des deux relevés. Si besoin est, l'organe de calcul 32 comporte des logiciels permettant de remailler en X et Y selon des pas choisis.

En pratique, l'organe de calcul 32 est équipé d'un programme d'acquisition de données qui relève cinq valeurs, à savoir la tension E appliquée aux potentiomètres 28 et 31, les indications des capteurs 20a, 20b, et les indications de mesure Vₓ et V_{y} délivrées par les potentiomètres 28 et 31, et les indications de mesure Vz₁ et Vz₂ des deux capteurs 20a et 20b, lorsque le déplacement du chariot 18, le long de l'axe X ou le long de l'axe Y est au moins égal à un pas de maillage.

A la fin de l'acquisition des données, les cinq valeurs de chaque mesure sont converties en valeurs Xᵢ, Yᵢ et Δzᵢ stockées dans un fichier trois colonnes du logiciel Excel par exemple.

Les données du Fichier Excel sont reprises par le logiciel Quikgrid par exemple pour remaillage selon un pas prédéterminé. Ce logiciel permet également de réaliser des régressions linéaires, de redresser le plan moyen de la surface à mesurer 21, de réaliser des changements de repère, et d'afficher ou imprimer la cartographie de la surface à mesurer 21.

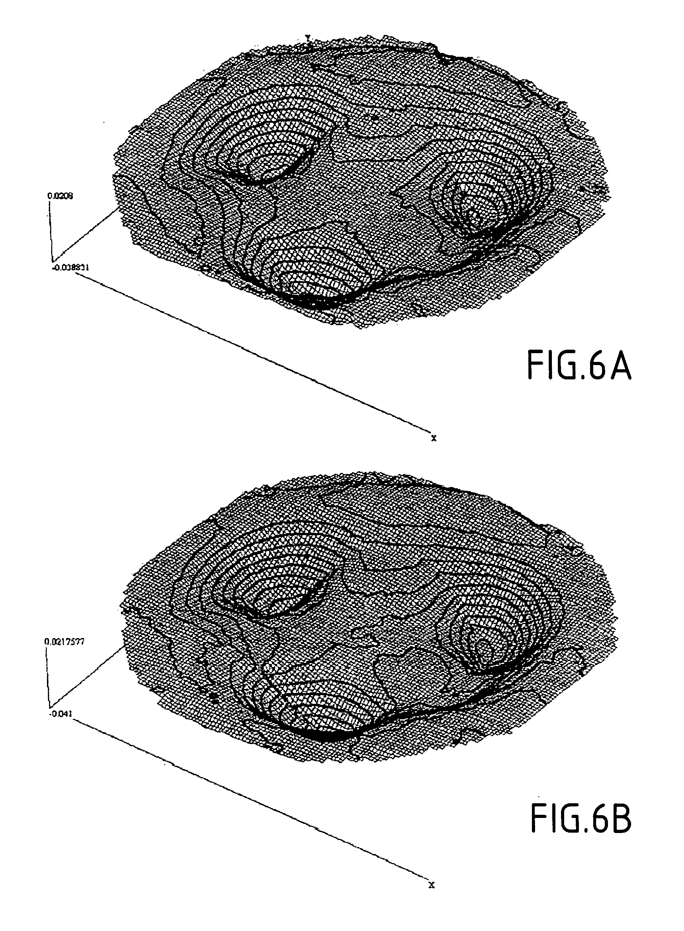

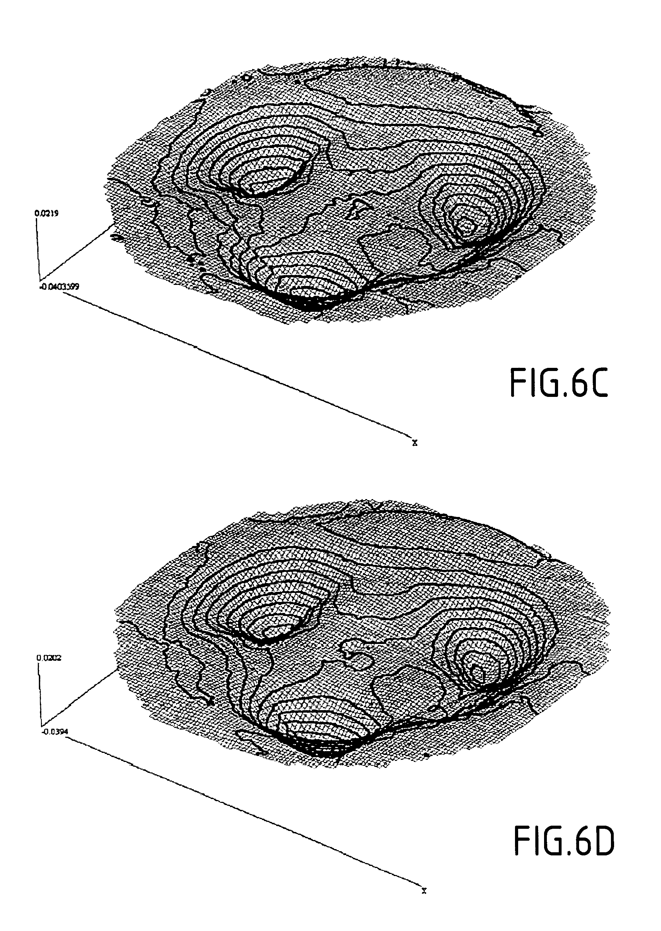

Les figures 6a à 6d montrent les images de quatre cartographies en 3D, obtenus à partir de quatre relevés de mesure, d'un plateau inférieur d'une presse utilisée pour comprimer des éprouvettes de béton, avec des courbes de niveau tous les 5 microns et un maillage de 5 mm. Ces figures montrent que le procédé selon l'invention et le dispositif décrit permettent une bonne reproductibilité des mesures et une grande précision. Ces images montrent des dépressions importantes de 50 microns de profondeur environ qui sont dues à une mauvaise manipulation antérieure de la presse correspondante.

Dans l'exemple décrit ci-dessus, le chariot 18 est déplacé manuellement selon l'axe des X et les coulisseaux 16a et 16b sont déplacés manuellement selon l'axe des Y. Il est évident que le chariot 18 et les coulisseaux 16a et 16b peuvent être motorisés sans sortir du cadre de l'invention.

De la même manière, on peut inverser le rôle des axes X et Y, en déplaçant les coulisseaux 16a et 16b en va et vient selon l'axe Y et en déplaçant le chariot pas à pas selon l'axe des X après une course des coulisseaux.

La mesure des variations de distance entre la surface de référence 11 et la surface à mesurer 21 pourrait également être effectuée avec un dispositif à un seul capteur au lieu de deux capteurs 20a, 20b. Il faudrait dans ce cas éviter d'introduire un jeu latéral supplémentaire par rapport aux jeux de guidage des coulisseaux 16a, 16b et du chariot 18 sur les glissières 15a, 15b, 17a et 17b.

## Revendications

1. Procédé pour mesurer les défauts de planéité d'une surface (21), **caractérisé par** les étapes suivantes :
a) on place une surface de référence (11) en regard de la surface à mesurer (21) et parallèlement à cette dernière,
b) on déplace un chariot (18) sur lequel sont montés tête-bêche deux capteurs de déplacement (20a, 20b) susceptibles de fournir des indications de mesure de leurs déplacements, en va-et-vient selon un axe X et pas-à-pas selon un axe Y perpendiculaire à l'axe X dans un plan X0Y intermédiaire entre la surface de référence (11) et la surface à mesurer (21), l'un des capteurs (20a) palpant la surface de référence (11) et l'autre capteur (20b) palpant la surface à mesurer (21), perpendiculairement au plan X0Y,
c) on relève les indications de mesure des deux capteurs de déplacement (20a, 20b) aux points d'intersection d'un maillage en X et Y et les coordonnées (Xᵢ, Yᵢ) de ces points d'intersection,
d) on convertit pour chaque point d'intersection (X, Yᵢ) du maillage, les indications de mesure des capteurs en valeurs de déplacement (z₁ z₂),
e) on soustrait, pour chaque point d'intersection (Xᵢ, Yᵢ) du maillage, les valeurs de déplacement (z₁₀, z₂₀) d'un point origine, respectivement des valeurs de déplacement (z₁, z₂), afin d'obtenir des écarts (Δz₁, Δz₂) de déplacement de chaque capteur par rapport au point origine,
f) on additionne pour chaque point d'intersection (Xᵢ, Yᵢ) du maillage les écarts Δz₁ et Δz₂ afin d'obtenir la mesure des défauts de planéité Zᵢ de la surface à mesurer aux points d'intersection (Xᵢ, Yᵢ) par rapport à la surface de référence, et
g) on établit la cartographie de la surface à mesurer.

2. Procédé selon la revendication 1, **caractérisé par le fait qu'**après l'étape f), et pour chaque point d'intersection (Xᵢ, Yᵢ) du maillage, on soustrait du défaut de planéité Zᵢ calculé, le défaut de planéité de la surface de référence (11) obtenues en remplaçant la surface à mesurer par une surface plane sans défauts et en exécutant préalablement les étapes a) à f) de la revendication 1 avec le même maillage.

3. Procédé selon l'une des revendications 1 ou 2, **caractérisé par le fait qu'**on utilise des capteurs de déplacement (20a, 20b) à transformateurs différentiels.

4. Appareil pour mettre en oeuvre le procédé selon l'une quelconque des revendications 1 à 3 et à mesurer les défauts de planéité d'une surface (21) d'une pièce (22) disposée sur un support (23) **caractérisé par le fait qu'**il comporte :
un bâti comprenant un cadre supérieur (2) et un cadre inférieur (3) reliés par une pluralité d'entretoises (4a, 4b, 4c) et définissant deux plans sensiblement parallèles,
une plaque (10) montée dans le cadre supérieur (2) et dont la face inférieure (11) définit une surface de référence (11),
un ensemble de trois pieds (5a, 5b, 5c) supportant le bâti et destinés à prendre appui sur le support (23) autour de la surface à mesurer (21), lesdits trois pieds étant réglables en hauteur afin de permettre de positionner la surface à mesurer (21) de manière sensiblement parallèle à la surface de référence (11),
un chariot (18) monté sur le cadre inférieur (3) de telle manière qu'il soit mobile dans le plan défini par ce cadre inférieur selon des axes longitudinaux X et Y,
une paire de capteurs (20a, 20b) de déplacement montés tête-bêche sur ledit chariot (18), le capteur supérieur (20a) palpant la surface de référence (11) et le capteur inférieur (20b) étant susceptible de palper la surface à mesurer (21), lesdits capteurs (20a, 20b) fournissant des signaux électriques en fonction de leurs déplacements,
des moyens (28, 31) pour mesurer les positions X et Y du chariot (18), et
des moyens de traitement (32) des signaux électriques fournis par les capteurs (20a, 20b).

5. Appareil selon la revendication 4, **caractérisé par le fait que** les capteurs (20a, 20b) sont des capteurs de déplacement transformateurs différentiels.

6. Appareil selon la revendication 5, **caractérisé par le fait que** le chariot (18) est monté coulissant sur deux premières glissières (17a, 17b) parallèles à l'axe X et supportés à leurs extrémités par deux coulisseaux (16a, 16b) montés coulissant respectivement sur des deuxièmes glissières (15a, 15b) parallèles à l'axe Y et supportées par le cadre inférieur (3).

7. Appareil selon la revendication 6, **caractérisé par le fait que** les moyens de mesure de la position X du chariot comportent un premier potentiomètre (28) rotatif monté sur un coulisseau (16a) et entraîné en rotation par une première courroie crantée (26) fixée au chariot (18), ladite première courroie crantée (26) passant autour d'une première poutre de renvoi (25b) montée sur l'autre coulisseau (16b).

8. Appareil selon la revendication 9, **caractérisé par le fait que** les moyens de mesure de la position Y du chariot (18) comportent un deuxième potentiomètre rotatif (31) monté à une extrémité d'une deuxième glissière (15a) et entraîné en rotation par une deuxième courroie crantée (30) fixée au coulisseau (16a) monté sur ladite deuxième glissière (15a), ladite deuxième courroie (30) crantée passant autour d'une deuxième poulie de renvoi (29b) montée à l'autre extrémité de ladite deuxième glissière (15a).

9. Appareil selon la revendication 8, **caractérisé par le fait que** les potentiomètres rotatifs (28, 30) sont reliés aux moyens de traitement (32) qui transforment les indications de ces potentiomètres en position X et Y.
